# EUROPÄISCHE PATENTSCHRIFT

(11) **EP 1 507 579 B1**
(45) Veröffentlichungstag und Bekanntmachung des Hinweises auf die Patenterteilung: **11.01.2012**
(21) Anmeldenummer: 03727428.9
(22) Anmeldetag: 02.05.2003
(51) Int. Cl.: B01D 46/04, B01D 46/24

(54) **REINIGUNGSVORRICHTUNG FÜR ROHRFÖRMIGE FILTERELEMENTE**
CLEANING DEVICE FOR TUBULAR FILTER ELEMENTS
DISPOSITIF DE NETTOYAGE POUR DES ELEMENTS DE FILTRE TUBULAIRES

(30) Priorität: 28.05.2002 DE 20208300 U
(43) Veröffentlichungstag der Anmeldung: 23.02.2005
(73) Patentinhaber: Intensiv-Filter GmbH & Co KG, D-42555 Velbert - Langenberg (DE)
(72) Erfinder: HÖFFKEN, Peter, 45239 Essen (DE); OTT, Frank, 45145 Essen (DE)
(74) Vertreter: Christophersen, Ruth
(86) Internationale Anmeldenummer: PCT/EP2003/004626
(87) Internationale Veröffentlichungsnummer: WO 2003/099419

(56) Entgegenhaltungen:
- EP-A- 1 095 688
- DE-U- 29 823 965
- FR-A- 2 593 410
- US-A- 4 661 131

## Beschreibung

Die Erfindung betrifft eine Reinigungsvorrichtung für rohrförmige, sich von dem Trennboden eines Staubfilters in dessen Staubluftraum hinein erstreckende Filterelemente, von denen jeweils mehrere Filterelemente zu einer gemeinsam in den Trennboden eingesetzten Gruppe zusammengefasst sind, mit einer oberhalb der Austrittsöffnungen der Filterelemente angeordneten Druckluftleitung sowie mit der Druckluftleitung in Strömungsverbindung stehenden Injektoren zur Abgabe eines Druckluftstrahls in die unterhalb angeordneten Austrittsöffnungen der Filterelemente, wobei sich über jedem Filterelement der Gruppe ein eigener, in die jeweilige Austrittsöffnung des Filterelements gerichteter Injektor befindet.

Eine in der Praxis weit verbreitete Vorrichtung für die Regeneration eines Staubfilters ist z. B. aus der DE 44 40 279 A1 bekannt. Die Filterelemente sind über die Fläche des Trennbodens zwischen Staubluftraum und Reinluftraum gleichmäßig verteilt und ragen unter ihrem Eigengewicht in den unten liegenden Staubluftraum, so dass sie von außen nach innen von der staubhaltigen Luft durchströmt werden. Der Innenraum der Filterelemente steht mit dem oberhalb des Trennbodens angeordneten Reinluftraum in Verbindung, welcher gegenüber dem Staubluftraum mit einem geringeren Druck betrieben wird, und von dem aus das gereinigte Gas das Filter verlässt. Durch periodisches Spülen müssen die Filterelemente von den an ihren Außenseiten haftenden Staubschichten soweit befreit und damit regeneriert werden, dass ein kontinuierlicher Betrieb des Filters möglich ist.

Hierzu ist es beispielsweise bekannt, die Filterelemente mittels eines Druckluft-Impuls-Injektorsystems so zu reinigen, dass die an der Außenseite der Filterelemente anhaftenden Staub- oder Produktpartikel durch Rückspülen mit Druckluft abgeblasen werden.

An die Regeneration der Filterelemente werden dann besonders hohe Anforderungen gestellt, wenn derartige Filter in Produktionsanlagen mit häufig wechselnden Produkten verwendet werden. Bei einem solchen Einsatz des Filters ist es erforderlich, den gesamten Staubluftraum einschließlich der rohrförmigen Filterelemente so von den beim Filterprozess anhaftenden Staub- oder Produktrückständen zu reinigen, dass bei einem Produktwechsel Produktverfälschungen oder Produktverunreinigungen unbedingt vermieden werden. Ein solcher hygienegerechter Betrieb ist vor allem bei der Verarbeitung von Lebensmitteln, pharmazeutischen oder medizinischen Produkten unumgänglich.

Eine weitere Vorrichtung für die Regeneration eines Staubfilters ist aus der EP 1 095 688 A1 bekannt. In diesem Staubfilter werden keine vereinzelten Filterelemente verwendet, sondern es sind jeweils mehrere Filterrohre zu einem Filterbündel gruppenweise zusammengefasst. Der Abstand zwischen den einzelnen Filterelementen einer solchen Gruppe ist geringer als der Abstand der Gruppen zueinander. Ein solches Filter arbeitet mit deutlich verkürzten Längen der Filterelemente, wodurch als Material auch eigenstabile Filtermaterialien einsetzbar sind, z. B. ein eigenstabiler Nadelfilz mit sehr glatter Oberfläche, hoher Luftdurchlässigkeit und einer Wandstärke von nicht mehr als 0,6 mm. Mit relativ kurzen Filterbündeln lässt sich ein relativ hoher Luftdurchsatz und damit Durchsatz an zu reinigender Staubluft erzielen. Auch das Filter nach der EP 1 095 688 A1 ist mit einer oberhalb angeordneten, mit Druckluftimpulsen arbeitenden Reinigungsvorrichtung versehen. Hierbei stößt ein einzelner Injektor einen Druckluftstrahl in fünf bis sechs die Gruppe bildende Filterelemente gleichzeitig aus. Zusätzlich vorgesehen ist eine auf dem Trennboden um die Gruppe der Filterelemente herum angeordnete Fangdüse, welche den Injektorstrahl in das Filterbündel hineinlenkt. Hierbei entstehen allerdings erhebliche Einströmverluste, die von dem an sich sehr leistungsfähigen Injektor nicht mehr kompensiert werden können.

Bei einer aus der FR 2 593 410 A bekannten Reinigungsvorrichtung für rohrförmige Filterelemente kommt eine Anordnung aus zwei oberhalb einer Gruppe von Filterelementen angeordneten Verteilerkammern zur Anwendung. Die erste Verteilerkammer setzt sich aus einem Zentralbereich und drei davon strahlenförmig abstehenden Armen zusammen, an deren Enden nach unten zu den jeweiligen Filterelement hin gerichtete Injektoren ausgebildet sind. Die zweite Verteilerkammer weist einen Zentralbereich mit insgesamt vier strahlenförmig davon ausgehenden Armen mit Injektoren auf. Zusätzlich befindet sich im Zentralbereich ein weiterer Injektor. Die Zentralbereiche der beiden Verteilerkammern sind an jeweils eine Überströmöffnung angeschlossen, die über ein Membranventil mit 180°-Umdrehung mit einer oberhalb angeordneten, gemeinsamen Druckluftleitung verbindbar ist.

Der Erfindung liegt die A u gab e zugrunde, eine Reinigungsvorrichtung für Staubfilter mit jeweils zu Gruppen zusammengefassten Filterelementen zu schaffen, die sich durch verminderte Strömungsverluste während des Reinigungsvorgangs und damit durch eine effizientere Spülung der einzelnen Filterelemente auszeichnet.

Zur Lösung dieser Aufgabenstellung wird vorgeschlagen, dass alle der Gruppe von Filterelementen zugeordneten Injektoren am Boden einer gemeinsamen Verteilerkammer angeordnet sind, die rund ist und über zwei Überströmöffnungen, die sich in Bezug auf die Mitte der Verteilerkammer einander gegenüberstehen, an die Druckluftleitung angeschlossen ist.

Auf diese Weise wird eine das Filter regenerierende Reinigungsvorrichtung für Filterelemente geschaffen, die in einer Gruppe, nämlich einer Kreisgruppe, angeordnet sind. Der von den Injektoren abgegebene Druckluftstrahl gelangt auf kürzestem Wege und ohne Umlenkung in das jeweils zugeordnete Filterelement, weshalb die Reinigungsvorrichtung mit hoher Effizienz arbeitet.

Indem die Verteilerkammer über zwei Überströmöffnungen, die sich in Bezug auf die Mitte der Verteilerkammer einander gegenüberstehen, an die Druckluftleitung angeschlossen ist, wird eine gleichmäßige und in Bezug auf Strömungsverluste verlustarme Verteilung der Druckluft in der Verteilerkammer erreicht.

Die erfindungsgemäße Vorrichtung eignet sich nicht nur für neu herzustellende Staubfilter, sondern insbesondere auch zur Modernisierung herkömmlicher, z. B. der in der DE 44 40 279 A1 beschriebenen Staubfilter. Diese Staubfilter lassen sich in einfacher Weise umrüsten, indem die jeweils singulär vorhandenen Filterschläuche gegen kompakte Gruppen deutlich kleinerer Filterelemente ausgetauscht werden. Analog erfolgt eine Umrüstung der Reinigungsvorrichtung, indem die in den vorhandenen Anlagen eingesetzte, große Coandadüse durch die erfindungsgemäßen, von einer gemeinsamen Verteilerkammer ausgehenden Injektoren hoher Effizienz ersetzt wird.

Als Filterelement werden vorzugsweise eigenstabile Filterkörper mit einer ausreichenden mechanischen Festigkeit zur Aufnahme des im Betriebszustand herrschenden Differenzdruckes zwischen Staubraum und Reinluftraum eingesetzt. Solchen Filterelemente benötigen keine zusätzlichen Stützelemente oder Stützkörbe in ihrem Inneren. Als Filtermaterialien können solche mit speziellen Oberflächen und gemäß dem Funktionsprinzip der Oberflächenfiltration eingesetzt werden, z. B. Filtermembranen, Filterschichten aus Mikrofasern. Vorteile dieser Materialien sind ein geringer Reststaubgehalt, hervorragende Filtrations- und Abreinigungseigenschaften, ein geringer Energiebedarf bei der Filtration durch geringere Differenzdrücke, ein geringerer Energiebedarf durch geringere Drücke bei der Abblasregeneration sowie eine längere Gebrauchsdauer durch die sich im wesentlichen starr verhaltenden Filterkörper.

Mit einer Ausgestaltung der erfindungsgemäßen Reinigungsvorrichtung wird vorgeschlagen, dass die Verteilerkammer als Ringkanal ausgebildet ist. Die Form des Ringkanals folgt im Wesentlichen der Anordnung der einzelnen Filterelemente, welche zu einer Gruppe zusammengefasst sind. Vorzugsweise sind in diesem Fall die Injektoren über die Länge bzw. den Umfang der Verteilerkammer gleichmäßig verteilt angeordnet, so dass sich eine optimale Ausrichtung in Richtung auf die Austrittsöffnungen der unterhalb angeordneten Filterelemente ergibt.

Vorgeschlagen wird ferner, daß sich die Achsen der am Boden der Verteilerkammer angeordneten Injektoren in Ausrichtung zu den Mittelachsen der Filterelemente der Gruppe befinden.

Vorzugsweise sind die Injektoren Öffnungen im Boden der Verteilerkammer. Dies ermöglicht eine besonders preiswerte Herstellung der Injektoren ohne zusätzliche Bauteile. Von Vorteil ist es, wenn die Ränder um die Öffnungen herum mit Vierteilkreis-Rundungen versehen sind, welche aus dem Bodenmaterial der Verteilerkammer geformt sind. Die Herstellung der so geformten Injektoren erfolgt vorzugsweise durch Umformen des Bodenmaterials der Verteilerkammer mittels entsprechender Stanzgeräte oder Druckstempel.

Mit einer weiteren Ausgestaltung wird vorgeschlagen, daß die Verteilerkammer unter der Druckluftleitung angeordnet ist und die Druckluft von oben her in dieVerteilerkammer gelangt. Dies ermöglicht eine verlustarme Strömungsführung ohne nennenswerte Umlenkungsverluste. Zur Befestigung der Verteilerkammer unter der Druckluftleitung können Haltemittel eingesetzt werden, welche die Verteilerkammer von unten gegen die Druckluftleitung ziehen und auf diese Weise an der Druckluftleitung fixieren.

Gemäß einer bevorzugten Ausgestaltung sind diese Haltemittel Winkelstücke, die gegen die Druckluftleitung verschraubbar sind, wobei sich die Winkelstücke mit einem Schenkel von unten gegen die Druckluftleitung und mit einem anderen Schenkel von unten gegen die Verteilerkammer abstützen. Hierdurch wird eine einfache und im Rahmen einer Nachrüstung auch besonders preisgünstige Befestigung der Verteilerkammer an der Unterseite einer bereits vorhandenen Druckluftleitung erreicht.

Zur verbesserten Fixierung wird ferner vorgeschlagen, daß die Stützflächen der sich gegen die Druckluftleitung abstützenden Schenkel eine Kontur aufweisen, die gleich ist der Kontur der Unterseite der Druckluftleitung.

Weitere Einzelheiten und Vorteile der Erfindung ergeben sich aus der nachfolgenden Beschreibung der zugehörigen Zeichnung, in der ein Ausführungsbeispiel eines Staubfilters mit einer Reinigungsvorrichtung dargestellt ist. In der Zeichnung zeigt:
- Fig. 1: einen Längsschnitt durch ein Staubfilter mit einer erfindungsgemäßen Reinigungsvorrichtung;
- Fig. 2: in perspektivischer Darstellung eine Reinigungsvorrichtung oberhalb einer Gruppe von Filterelementen des Staubfilters;
- Fig. 3: die Gegenstände nach Fig. 2, jedoch in einem Teilschnitt dargestellt und
- Fig. 4: eine perspektivische Ansicht ⁻von schräg unten auf die Reinigungsvorrichtung.

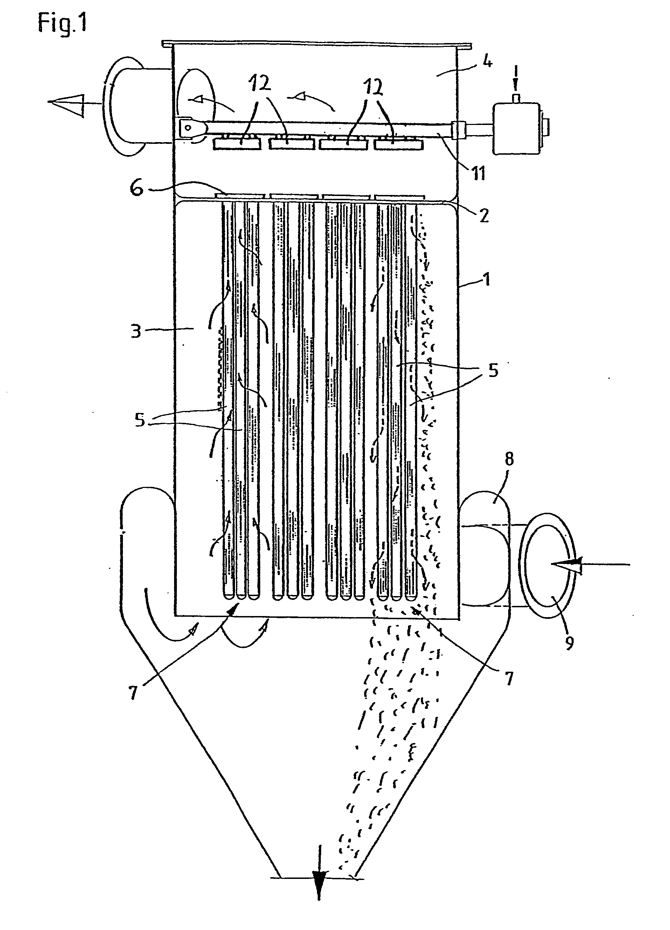

Ein in Fig. 1 in einer Gesamtansicht dargestelltes Staubfilter besteht aus einem vertikal ausgerichteten, zylindrischen Filtergehäuse 1, welches durch einen horizontal liegenden Trennboden 2 in einen unten liegenden Staubgasraum 3 und einen oben liegenden Reingasraum 4 unterteilt ist. Der Trennboden 2 ist ähnlich einem Rohrboden gestaltet und verfügt über eine Mehrzahl von Öffnungen mit darin eingesetzten, langgestreckten Filterelementen. Bei den dargestellten Filterelementen handelt es sich um Filterrohre 5, die an ihrem unteren Ende verschlossen und an ihrem oberen Ende offen sind. An ihrem oberen offenen Ende sind mehrere der Filterrohre 5 mit einem gemeinsamen ringförmigen Flansch 6 versehen, unter dessen Verwendung die Filterrohre 5 von oben her in die Öffnungen des Trennbodens 2 eingehängt sind, wobei sich der Flansch 6 auf der Oberseite des Trennbodens 2 abstützt. Die wirksame Filterfläche wird durch die Mantelfläche der beim Ausführungsbeispiel zylindrisch gestalteten Filterrohre 5 gebildet.

Jeweils mehrere Filterrohre 5 sind mittels des Flansches 6 so zueinander angeordnet, daß sie eine Gruppe bzw. ein Filterbündel 7 bilden. Im dargestellten Ausführungsbeispiel bilden jeweils fünf Filterrohre 5 eine solche Gruppe, wobei der Abstand zwischen den einzelnen Filterrohren 5 eines jeden Filterbündels 7 geringer ist als der Abstand der einzelnen Filterbündel 7 zueinander.

Im Bereich des unteren Endes der Filterrohre 5 ist auf der Außenseite des Filtergehäuses 1 ein Ringkanal 8 angeordnet, in den zur Zufuhr der staubhaltigen Luft tangential ein Staubluftzufuhrkanal 9 einmündet.

Zum Reinigen und damit Regenerieren der einzelnen Filterrohre 5 mittels Druckluft sind im Reinluftraum 4 oberhalb der Filterbündel 7 Druckluftquellen eines Druckluft-Impuls-Injektorsystems angeordnet. Die Druckluftquellen sorgen für die Abreinigung der Filterrohre 5 von dem an deren Außenflächen ausfiltrierten Staub oder staubhaltigen Produkt während des Filtrierprozesses. Die Druckluft gelangt über horizontal verlaufende Druckluftleitungen 11 zu Injektoren, strömt aus diesen Injektoren aus und gelangt so von oben her in die Öffnungen 15 der einzelnen Filterrohre 5.

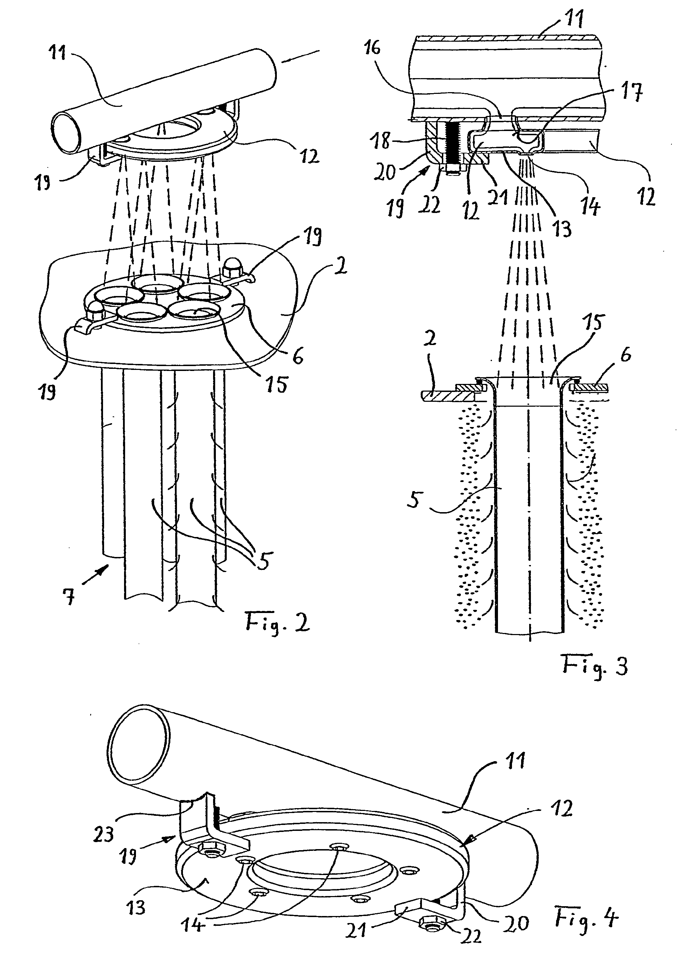

Einzelheiten der voranstehend allgemein beschriebenen Reinigungsvorrichtung werden nachfolgend anhand der Fign. 2, 3 und 4 erläutert.

Die Druckluftleitungen 11, von denen sich mehrere parallel und horizontal in dem Reinluftraum 4 erstrecken, sind so geführt, daß die Druckluftleitung 11 exakt die Mittelachse der durch das Filterbündel 7 gebildeten Gruppe schneidet. Unter der Druckluftleitung 11 ist eine Verteilerkammer 12 befestigt, die beim Ausführungsbeispiel die Gestalt eines flachen Ringkanals aufweist. Der Durchmesser der ringförmigen Verteilerkammer 12 ist so gewählt, daß die gedachten Verlängerungen der Längsachsen der Filterelemente bzw. Filterrohre 5 durch die Verteilerkammer 12 hindurchgehen.

Insbesondere Fig. 4 läßt in einer perspektivischen Ansicht von schräg unten erkennen, daß über den flachen Boden 13 der Verteilerkammer 12 verteilt mehrere Öffnungen als Injektoren 14 angeordnet sind. Diese Öffnungen bzw. Injektoren 14 sind so ausgerichtet, daß sie exakt auf derselben Achse liegen, wie die Mittelachse der einzelnen Filterrohre 5. Die aus den Injektoren 14 senkrecht nach unten austretende Druckluft gelangt daher unmittelbar und auf kürzestem Wege in die jeweils zugeordnete Austrittsöffnung 15 des jeweiligen Filterrohres 5. Da die Gruppe von Filterelementen aus fünf Filterrohren 5 besteht, beträgt auch die Anzahl der Injektoren 14 im Boden der Verteilerkammer 12 fünf.

Fig. 3 läßt als Schnittdarstellung erkennen, daß die runde Verteilerkammer 12 über Überströmöffnungen 16 an die Druckluftleitung 11 angeschlossen ist. Hierbei ist jede Verteilerkammer 12 mit insgesamt zwei Überströmöffnungen 16 versehen, die sich in bezug auf die Mitte der Verteilerkammer 12 einander gegenüberstehen. Durch diese Anordnung von zwei Überströmöffnungen 16 wird eine gleichmäßige Verteilung der über die Druckluftleitung 11 zuströmenden Druckluft in das Innere der Verteilerkammer 12 erreicht.

Die Überströmöffnungen 16 sind vorzugsweise mit großzügigen Rundungen 17 versehen, um auch insoweit die Strömungsverluste gering zu halten.

Die Reinigungsvorrichtung läßt sich in einfacher Weise an bereits vorhandenen Staubfiltern nachrüsten. Hierzu werden die bei den nachzurüstenden Staubfiltern bereits vorhandenen Druckluftleitungen 11 an ihrer Unterseite mit Gewindestiften 18 versehen, die vorzugsweise an der Druckluftleitung 11 angeschweißt werden. Auf die Gewindestifte 18 werden Haltemittel in Gestalt von Winkelstücken 19 aufgesetzt. Die Winkelstücke 19 stützen sich mit einem vertikalen Schenkel 20 von unten gegen die Druckluftleitung 11, und mit einem horizontalen Schenkel 21 von unten gegen den Boden 13 der Verteilerkammer 12 ab, sobald auf den Gewindestift 18 eine Mutter 22 aufgeschraubt und gegen den Schenkel 21 gespannt wird. Der Schenkel 21 ist hierzu mit einer Bohrung versehen, welche der Gewindestift 18 durchdringt.

Gemäß Fig. 4 weisen die Stützflächen 23 der sich gegen die Druckluftleitung 11 abstützenden Schenkel 20 eine Kontur auf, die gleich ist der kreisförmigen Kontur der Unterseite der Druckluftleitung 11.

Fig. 3 läßt erkennen, daß es sich bei den Injektoren 14 um Öffnungen im Boden 13 der Verteilerkammer 12 handelt. Die Ränder um die Öffnungen herum sind mit Vierteilkreis-Rundungen versehen. Die Herstellung der so geformten Injektoren erfolgt vorzugsweise durch Umformen des Bodenmaterials der Verteilerkammer 12 mittels entsprechender Stanzgeräte oder Druckstempel. Durch die abgerundeten Kanten kann die Druckluft mit geringen Strömungsverlusten aus der Verteilerkammer 12 ausströmen.

Fig. 2 läßt erkennen, daß auch der Flansch 6, welcher zugleich ein ganzes Filterbündel 7 aufnimmt, mit Haltemitteln an dem Trennboden 2 befestigt wird, wie sie den Haltemitteln 19 für die Reinigungsvorrichtung vergleichbar sind. Dies erleichtert die nachträgliche Umrüstung der Filterelemente durch Ersatz einzelner, relativ langer und voluminöser Filterschläuche durch die dargestellten, im Durchmesser kleineren und wesentlich kompakter bauenden Filterbündel.

### Bezugszeichenliste

- 1: Filtergehäuse
- 2: Trennboden
- 3: Staubluftraum
- 4: Reinluftraum
- 5: Filterrohr
- 6: Flansch
- 7: Filterbündel, Gruppe von Filterelementen
- 8: Ringkanal
- 9: Staubluftzufuhrkanal
- 11: Druckluftleitung
- 12: Verteilerkammer
- 13: Boden
- 14: Injektor
- 15: Austrittsöffnung
- 16: Überströmöffnung
- 17: Rundung
- 18: Gewindestift
- 19: Winkelstück
- 20: Schenkel
- 21: Schenkel
- 22: Mutter
- 23: Stützfläche

## Patentansprüche

1. Reinigungsvorrichtung für rohrförmige, sich von dem Trennboden eines Staubfilters in dessen Staubluftraum hinein erstreckende Filterelemente, von denen jeweils mehrere Filterelemente zu einer gemeinsam in den Trennboden eingesetzten Gruppe zusammengefasst sind, mit einer oberhalb der Austrittsöffnungen der Filterelemente angeordneten Druckluftleitung (11) sowie mit mit der Druckluftleitung (11) in Strömungsverbindung stehenden Injektoren (14) zur Abgabe eines Druckluftstrahls in die unterhalb angeordneten Austrittsöffnungen der Filterelemente, wobei sich über jedem Filterelement (5) der Gruppe ein eigener, in die jeweilige Austrittsöffnung (15) des Filterelements (5) gerichteter Injektor (14) befindet,
**dadurch gekennzeichnet,**
**dass** alle der Gruppe von Filterelementen (5) zugeordneten Injektoren (14) am Boden (13) einer gemeinsamen Verteilerkammer (12) angeordnet sind, die rund ist und über zwei Überströmöffnungen (16), die sich in Bezug auf die Mitte der Verteilerkammer (12) einander gegenüberstehen, an die Druckluftleitung (11) angeschlossen ist.

2. Reinigungsvorrichtung nach Anspruch 1, **dadurch gekennzeichnet, dass** die Verteilerkammer (12) als Ringkanal ausgebildet ist.

3. Reinigungsvorrichtung nach Anspruch 1 oder Anspruch 2, **dadurch gekennzeichnet, dass** die Injektoren (14) über die Länge bzw. den Umfang der Verteilerkammer (12) gleichmäßig verteilt angeordnet sind.

4. Reinigungsvorrichtung nach einem der vorangehenden Ansprüche, **dadurch gekennzeichnet, dass** sich die Luftaustrittsachsen der am Boden (13) der Verteilerkammer (12) angeordneten Injektoren (14) in Ausrichtung zu den Mittelachsen der Filterelemente (5) der Gruppe befinden.

5. Reinigungsvorrichtung nach einem der Ansprüche 2 bis 4, **dadurch gekennzeichnet, dass** die Verteilerkammer (12) die Gestalt einer Ringscheibe aufweist.

6. Reinigungsvorrichtung nach einem der vorangehenden Ansprüche, **dadurch gekennzeichnet, dass** die Injektoren (14) Öffnungen im Boden (13) der Verteilerkammer (12) sind.

7. Reinigungsvorrichtung nach Anspruch 6, **dadurch gekennzeichnet, dass** die Ränder um die Öffnungen herum mit Vierteilkreis-Rundungen versehen sind, welche aus dem Bodenmaterial der Verteilerkammer (12) geformt sind.

8. Reinigungsvorrichtung nach einem der vorangehenden Ansprüche, **dadurch gekennzeichnet, dass** die Verteilerkammer (12) unter der Druckluftleitung (11) angeordnet ist und die Druckluft von oben her in die Verteilerkammer (12) gelangt.

9. Reinigungsvorrichtung nach Anspruch 8, **gekennzeichnet durch** Haltemittel, welche die Verteilerkammer (12) von unten gegen die Druckluftleitung (11) ziehen und auf diese Weise an der Druckluftleitung fixieren.

10. Reinigungsvorrichtung nach Anspruch 9, **dadurch gekennzeichnet, dass** die Haltemittel gegen die Druckluftleitung (11) verschraubbare Winkelstücke (19) sind, die sich mit einem Schenkel (20) von unten gegen die Druckluftleitung (11) und mit einem anderen Schenkel (21) von unten gegen die Verteilerkammer (12) abstützen.

11. Reinigungsvorrichtung nach Anspruch 10, **dadurch gekennzeichnet, dass** die Stützflächen 23 der sich gegen die Druckluftleitung (11) abstützenden Schenkel (20) eine Kontur aufweisen, die gleich ist der Kontur der Unterseite der Druckluftleitung (11).

## Claims

1. A cleaning apparatus for tubular filter elements which extend from the partition base of a dust filter into the dust-contaminated air space thereof and of which a plurality of filter elements are brought together in each case to form a group inserted jointly into the partition base, with a compressed-air line (11) arranged above the outlet openings of the filter elements and with injectors (14) connected in terms of flow to the compressed-air line (11) in order to deliver a jet of compressed air into the outlet openings of the filter elements arranged below, wherein a separate injector (14) directed into the respective outlet opening (15) of the filter element (5) is situated above each filter element (5) of the group, **characterized in that** all the injectors (14) associated with the group of filter elements (5) are arranged on the base (13) of a common distributor chamber (12) which is round and which is attached to the compressed-air line (11) by way of two overflow openings (16) which are opposite each other with respect to the middle of the distributor chamber (12).

2. A cleaning apparatus according to Claim 1, **characterized in that** the distributor chamber (12) is designed in the form of an annular channel.

3. A cleaning apparatus according to Claim 1 or Claim 2, **characterized in that** the injectors (14) are arranged uniformly distributed over the length or the periphery of the distributor chamber (12).

4. A cleaning apparatus according to any one of the preceding Claims, **characterized in that** the air outlet axes of the injectors (14) arranged on the base (13) of the distributor chamber (12) are situated in alignment with the centre axes of the filter elements (5) of the group.

5. A cleaning apparatus according to any one of Claims 2 to 4, **characterized in that** the distributor chamber (12) is in the shape of an annular disc.

6. A cleaning apparatus according to any one of the preceding Claims, **characterized in that** the injectors (14) are openings in the base (13) of the distributor chamber (12).

7. A cleaning apparatus according to Claim 6, **characterized in that** the edges around the openings are provided with rounded portions in the shape of a quadrant which are formed from the base material of the distributor chamber (12).

8. A cleaning apparatus according to any one of the preceding Claims, **characterized in that** the distributor chamber (12) is arranged below the compressed-air line (11) and the compressed air flows into the distributor chamber (12) from above.

9. A cleaning apparatus according to Claim 8, **characterized by** retaining means which pull the distributor chamber (12) against the compressed-air line (11) from below and fix it to the compressed-air line in this way.

10. A cleaning apparatus according to Claim 9, **characterized in that** the retaining means are angle members (19) which are capable of being screwed against the compressed-air line (11) and which are supported by one arm (20) from below against the compressed-air line (11) and by another arm (21) from below against the distributor chamber (12).

11. A cleaning apparatus according to Claim 10, **characterized in that** the support faces 23 of the arms (20) supported against the compressed-air line (11) have a contour which is the same as the contour of the underside of the compressed-air line (11).

## Revendications

1. Dispositif de nettoyage pour des éléments de filtrage tubulaires qui s'étendent depuis le fond de séparation d'un filtre à poussières jusqu'à l'intérieur du compartiment d'air empoussiéré de celui-ci, parmi lesquels respectivement plusieurs éléments de filtrage sont regroupés pour former un groupe monté conjointement dans le fond de séparation, comportant une conduite d'air comprimé (11) disposée au-dessus des orifices de sortie des éléments de filtrage, ainsi que des injecteurs (14) en liaison fluidique avec la conduite d'air comprimé (11), destinés à projeter un jet d'air comprimé dans les orifices de sortie, disposés en dessous, des éléments de filtrage, chaque élément de filtrage (5) du groupe possédant son propre injecteur (14), disposé au-dessus de celui-ci et dirigé vers l'orifice de sortie (15) respectif de l'élément de filtrage (5),
**caractérisé en ce que**
tous les injecteurs (14), affectés au groupe d'éléments de filtrage (5), sont disposés sur le fond (13) d'une chambre de distribution (12) commune, qui est ronde et qui est raccordée à la conduite d'air comprimé (11) via deux orifices d'écoulement (16) situés face à face par rapport au milieu de la chambre de distribution (12).

2. Dispositif de nettoyage selon la revendication 1, **caractérisé en ce que** la chambre de distribution (12) est réalisée sous la forme d'un canal annulaire.

3. Dispositif de nettoyage selon la revendication 1 ou 2, **caractérisé en ce que** les injecteurs (14) sont uniformément répartis sur la longueur ou le pourtour de la chambre de distribution (12).

4. Dispositif de nettoyage selon l'une quelconque des revendications précédentes, **caractérisé en ce que** les axes de sortie d'air des injecteurs (14), disposés sur le fond (13) de la chambre de distribution (12), sont situés en alignement avec les axes médians des éléments de filtrage (5).

5. Dispositif de nettoyage selon l'une quelconque des revendications 2 à 4, **caractérisé en ce que** la chambre de distribution (12) a la forme d'un disque annulaire.

6. Dispositif de nettoyage selon l'une quelconque des revendications précédentes, **caractérisé en ce que** les injecteurs (14) sont des orifices dans le fond (13) de la chambre de distribution (12).

7. Dispositif de nettoyage selon la revendication 6, **caractérisé en ce que** les bords autour des orifices sont munis d'arrondis en quart de cercle qui sont formés dans le matériau du fond de la chambre de distribution (12).

8. Dispositif de nettoyage selon l'une quelconque des revendications précédentes, **caractérisé en ce que** la chambre de distribution (12) est disposée en dessous de la conduite d'air comprimé (11) et l'air comprimé parvient dans la chambre de distribution (12) depuis le haut.

9. Dispositif de nettoyage selon la revendication 8, **caractérisé par** des moyens de fixation qui tirent la chambre de distribution (12) depuis le bas contre la conduite d'air comprimé (11) et la fixent ainsi contre la conduite d'air comprimé.

10. Dispositif de nettoyage selon la revendication 9, **caractérisé en ce que** les moyens de fixation sont des cornières (19) pouvant être vissées contre la conduite d'air comprimé (11) et prenant appui avec une branche (20) depuis le bas contre la conduite d'air comprimé (11) et avec une autre branche (21) depuis le bas contre la chambre de distribution (12).

11. Dispositif de nettoyage selon la revendication 10, **caractérisé en ce que** les faces d'appui (23) des branches (20) en appui contre la conduite d'air comprimé (11) ont un contour identique au contour de la face inférieure de la conduite d'air comprimé (11).
